# FASCICULE DE BREVET EUROPEEN

(11) **EP 2 104 844 B1**
(45) Date de publication et mention de la délivrance du brevet: **21.09.2011**
(21) Numéro de dépôt: 07857878.8
(22) Date de dépôt: 19.12.2007
(51) Int. Cl.: G01N 1/02

(54) **DISPOSITIFS DE PRELEVEMENT ET CONFINEMENT DE CONTAMINATIONS CHIMIQUES, DISPOSITIF DE TRANSPORT ASSOCIE ET APPLICATION AU TRANSPORT DE PRELEVEMENTS CHIMIQUES VERS UNE UNITE D'ANALYSE CHIMIQUE**
VORRICHTUNG ZUR PROBENNAHME UND EINGRENZUNG CHEMISCHER KONTAMINATIONEN, ENTSPRECHENDE TRANSPORTVORRICHTUNG UND ANWENDUNG BEIM TRANSPORT CHEMISCHER PROBEN ZU EINER CHEMISCHEN ANALYSEEINHEIT
DEVICES FOR SAMPLING AND CONFINING CHEMICAL CONTAMINATIONS, ASSOCIATED TRANSPORT DEVICE AND APPLICATION TO THE TRANSPORT OF CHEMICAL SAMPLES TO A CHEMICAL ANALYSIS UNIT

(30) Priorité: 20.12.2006 FR 0655724
(43) Date de publication de la demande: 30.09.2009
(73) Titulaire: Commissariat à l'Énergie Atomique et aux Énergies Alternatives, 75015 Paris (FR)
(72) Inventeur: TOVENA-PECAULT, Isabelle, 33850 Leognan (FR)
(74) Mandataire: Ilgart, Jean-Christophe
(86) Numéro de dépôt international: PCT/EP2007/064257
(87) Numéro de publication internationale: WO 2008/074843

(56) Documents cités:
- WO-A-02/41823
- US-A- 5 509 255
- US-A- 5 765 341
- US-A1- 2002 083 717

## Description

### DOMAINE TECHNIQUE

L'invention concerne le domaine de l'ultra-propreté, à base de matériaux (ou nanomatériaux), fabriqués dans des salles propres ou zones à environnement maîtrisé apparenté.

L'invention concerne plus particulièrement le prélèvement, le confinement et le transport de(s) contamination(s) chimique(s) susceptibles de se trouver dans ces salles ou zones propres, en vue d'une analyse chimique délocalisée.

### ART ANTÉRIEUR

Pour minimiser les risques et surveiller la fabrication des matériaux (ou nanomatériaux), il est nécessaire d'analyser les contaminations susceptibles d'être présentes dans l'air des salles propres à l'état de traces ou sur les surfaces.

Or, les détecteurs connus de composés organiques volatils en continu ont une limite actuelle de détection de l'ordre de 0,1 ppm en volume, très supérieure aux exigences du domaine des semiconducteurs par exemple, où les concentrations tolérées sont inférieures à 1 ppb en volume.

Les concentrations faibles des contaminations imposent en général un prélèvement des composés associé à une méthode de pré-concentration afin d'atteindre les limites de détection requises pour les analyses dans ce domaine. Ainsi, la plupart des équipements de prélèvement nécessitent de nombreuses heures de collecte avant de pouvoir analyser les échantillons. A cet inconvénient de durée, s'ajoute le risque de perte du prélèvement.

Il n'y a pas, à ce jour, de définition normalisée de la contamination chimique, même si cela fait actuellement l'objet d'un groupe de travail dans le cadre de la norme ISO 14644-W69.

Dans le cadre de l'invention, on propose de considérer la contamination chimique comme toute entité particulaire, moléculaire ou ionique pouvant induire une réaction chimique néfaste sur un produit, un patient ou un procédé. Pour les entités particulaires, l'invention s'applique préférentiellement au confinement de contaminations particulaires, de taille unitaire comprise entre 0,1 et 5 µm pour leur forme volumique et, de taille unitaire comprise entre 0,05 et 500 µm pour leur forme surfacique.

Il n'existe pas non plus, à ce jour, de procédures ou standards permettant de contrôler la propreté chimique des surfaces ou des environnements.

Néanmoins, on utilise généralement des cibles collectrices (autrement dit supports de prélèvement) dans les environnements à tester. Ces supports de prélèvement doivent être le plus possible représentatifs des surfaces sensibles du produit ou procédé de fabrication ou bien offrir une très grande surface spécifique pour les analyses de contamination chimique de type aéroportée.

Ces supports contaminés par de la contamination chimique doivent ensuite être confinés pour :
- ne pas perdre les contaminations chimiques lors d'un éventuel transport entre le lieu de prélèvement et le lieu d'analyse, c'est-à-dire ne pas modifier la quantité des contaminations chimiques prélevées,
- ne pas modifier la nature chimique des contaminations chimiques prélevées,
- ne pas contaminer ces échantillons par une contamination supplémentaire pendant le transport.

### EXPOSÉ DE L'INVENTION

L'invention propose de pallier les inconvénients précités et donc, de proposer des dispositifs permettant de confiner les contaminations chimiques prélevées dans un récipient ou sur un support de collecte sans être modifiées dans leur nature et leur quantité, en particulier sans être contaminées par d'autres sources de pollution.

A cette fin, l'invention concerne tout d'abord un dispositif de prélèvement et confinement de contaminations chimiques destinées à l'analyse chimique, comprenant :
- au moins un récipient adapté pour contenir un liquide de prélèvement dans lequel sont piégées des contaminations chimiques sous la forme particulaire et/ou moléculaire, le récipient comprenant des parois chimiquement neutres,
- une enveloppe externe de dimensions adaptées pour maintenir le récipient obturé dans une position donnée et, pour contenir un gaz en contact avec le récipient obturé et en surpression par rapport à l'intérieur dudit récipient, l'enveloppe externe comprenant des moyens de régulation de la température à l'intérieur du récipient obturé.

Dans le cadre de l'invention, l'expression «chimiquement neutre(s) » signifie que la (les) partie(s) considérée(s) est (sont) réalisée(s) en un ou plusieurs matériaux présentant l'ensemble des caractéristiques suivantes :
- un taux de dégazage défini, par exemple, tel que la perte de masse totale est inférieure à 1% selon le test ECSS Q70-2A et tel que la quantité volatile recondensée est inférieure à 0,1% selon le même test,
- une inertie chimique définie, par exemple, telle que la perte ou le gain de masse suite à une potentielle réaction chimique soit inférieure à 1% en masse,
- une aptitude à générer des particules définie, par exemple, telle que le niveau de contamination surfacique soit inférieur à un niveau 100 par exemple, selon la norme IEST 1246D.

Il va de soi que, les niveaux de contamination particulaire surfacique, d'inertie chimique et de taux de dégazage doivent être définis mais qu'ils peuvent l'être à des niveaux inférieurs ou supérieurs suivant les applications.

L'invention concerne également un dispositif de prélèvement et confinement de contaminations chimiques destinées à l'analyse chimique, comprenant :
- au moins un support de prélèvement de contaminations chimiques adapté pour adsorber des contaminations sous la forme particulaire et/ou moléculaire,
- un boitier pour maintenir le(s) support(s) dans une position donnée, le boitier comprenant des parois chimiquement neutres adaptées pour se refermer sur elles-mêmes en formant un volume clos,
- une enveloppe externe de dimensions adaptées à la fois pour envelopper le boitier fermé et pour contenir un gaz en contact avec le boitier fermé et en surpression par rapport à l'intérieur dudit boitier, l'enveloppe externe comprenant des moyens de régulation de la température à l'intérieur du boitier fermé.

La mise en place du(des) support(s) porteurs de contamination chimique dans le dispositif selon l'invention devra être de préférence réalisée en salle propre (au moins selon la norme ISO 5 selon ISO 14644-1 et si possible avec une spécificité en ISO-AMC selon ISO 14644-8) avec des précautions particulières dans la manipulation des supports.

L'homme du métier veillera à ce qu'il y ait une rigueur (définition de procédures) dans l'utilisation du dispositif selon l'invention de façon à limiter le temps pendant lequel ce dispositif fonctionne dans un domaine non spécifié pour le support porteur de contamination. L'invention telle que définie consiste à maintenir le(s) support(s) dans le dispositif à une température relativement basse pour éviter la perte des espèces volatiles adsorbées sur le (s) support(s) sans qu'il(s) ne devienne(nt) alors un piège pour d'autres molécules.

L'invention concerne également un dispositif de transport comprenant un dispositif de prélèvement et confinement précédemment défini, dans lequel l'enveloppe externe comprend une partie rigide adaptée pour être transportée manuellement.

L'invention concerne également un procédé de prélèvement et confinement de contaminations chimiques destinées à l'analyse chimique comprenant les étapes suivantes :
a) prélèvement des contaminations chimiques par piégeage sous la forme particulaire et/ou moléculaire dans un liquide,
b) introduction du liquide contenant les contaminations chimiques dans un récipient aux parois chimiquement neutres et obturation du récipient,
c) mise en contact de l'extérieur du récipient obturé avec un gaz en surpression par rapport à l'intérieur du récipient,
d) régulation de la température régnant à l'intérieur du boitier depuis un environnement extérieur au gaz.

L'invention concerne également un procédé de prélèvement et confinement de contamination(s) chimique(s) destiné(s) à l'analyse chimique comprenant les étapes suivantes :
a) adsorption des contaminations chimiques sous la forme particulaire et/ou moléculaire par au moins un support,
b) mise en place du support dans un boitier rigide aux parois chimiquement neutres et fermeture du boitier autour du support,
c) mise en contact de l'extérieur du boitier fermé avec un gaz en surpression par rapport à l'intérieur du boitier,
d) régulation de la température régnant à l'intérieur du boitier depuis un environnement extérieur au gaz.

Le support de prélèvement adapté pour l'adsorption des contaminations chimiques peut avantageusement consister en un adhésif de type Scotch® ou un adhésif commercialisé sous la dénomination commerciale Tenax®.

Une utilisation avantageuse d'un dispositif de transport mentionné ci-dessus est le transport de contaminations chimiques d'une unité de fabrication vers une unité d'analyse chimique.

### BRÈVE DESCRIPTION DES DESSINS

D'autres avantages et caractéristiques ressortiront mieux à la lecture des figures suivantes dans lesquelles :
- la figure 1 est une vue schématique générale d'un mode de réalisation préféré d'un dispositif selon l'invention,
- la figure la est une vue agrandie d'une partie de la figure 1 montrant la constitution d'un boitier selon l'invention,
- la figure 2 est une vue en coupe transversale selon l'axe de symétrie du dispositif de la figure 1,
- la figure 2a est une vue agrandie de la figure 2 montrant une zone de contact entre le support et le boitier selon l'invention.

### EXPOSÉ DÉTAILLÉ DE MODES DE RÉALISATION PARTICULIERS

La valise illustrée intègre un dispositif de prélèvement et confinement 1 selon l'invention.

Ce dispositif 1 comprend tout d'abord :
- un support 2 sur lequel des contaminations chimiques prélevées sur une ligne de fabrication ont été adsorbées,
- un boitier 3 fermé autour du support 2. A titre d'exemple, les parois 30 de ce boitier 3 sont ici en inox, les faces 300 en regard du support 2 étant recouvertes d'une couche 31 de Teflon®. De préférence, l'épaisseur (e)de la couche 31 est de l'ordre d'une dizaine de microns.

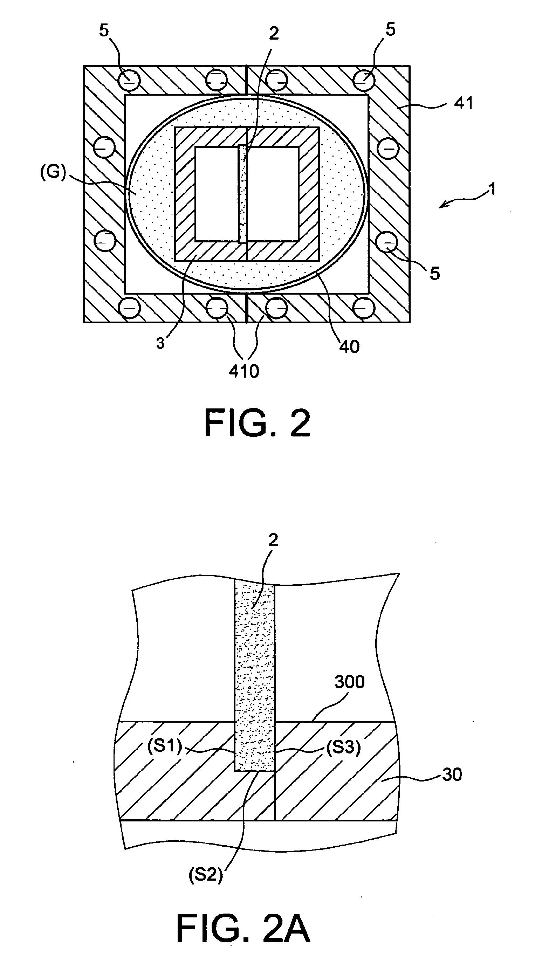

Comme il est visible à la figure 2A, le boitier 3 est ajusté pour maintenir le support 2 dans une position donnée, la surface de contact (S1+S2+S3) entre le support 2 et le boitier 3 étant judicieusement choisie pour être très faible au regard des dimensions du support 2. Le Teflon® avantageusement déposé sur les surfaces de contact (S1), (S2) et (S3) permet de limiter le transfert de la contamination chimique du support contaminé 2 au boîtier 3.

Le dispositif 1 comprend également une enveloppe externe 4 dont une partie souple 40 est gonflée autour du boitier fermé 3 contenant le support 2 de contaminations chimiques (figure 2). Cette partie souple 40 est gonflée d'un gaz inerte (G) en surpression par rapport à l'intérieur du boitier 3 et est constituée d'un film chimiquement neutre et permettant en particulier d'éviter l'introduction ultérieure de contaminations particulaires. De préférence, le film est réalisé en polyéthylène naturel à faible taux de dégazage et résistant mécaniquement. Des variantes de réalisation à envisager peuvent consister à gonfler la partie souple 40 (par exemple, un sac ou film scellé en plastique chimiquement inerte) à l'aide d'un gaz inerte ou non contenant ou non des dessicants.

L'enveloppe externe 4 comprend également une partie rigide 41 constituée par deux battants 410 de valise. A l'intérieur de ces battants 410 est implanté un circuit d'eau réfrigérée 5, ce qui permet de maintenir une température inférieure, de préférence d'au moins 5°C, à la température de fonctionnement du support contaminé. A titre d'exemple lorsque cette dernière est de l'ordre de 21°C (typiquement la température d'une salle propre) la température de réfrigération choisie sera préférentiellement de l'ordre de 15°C.

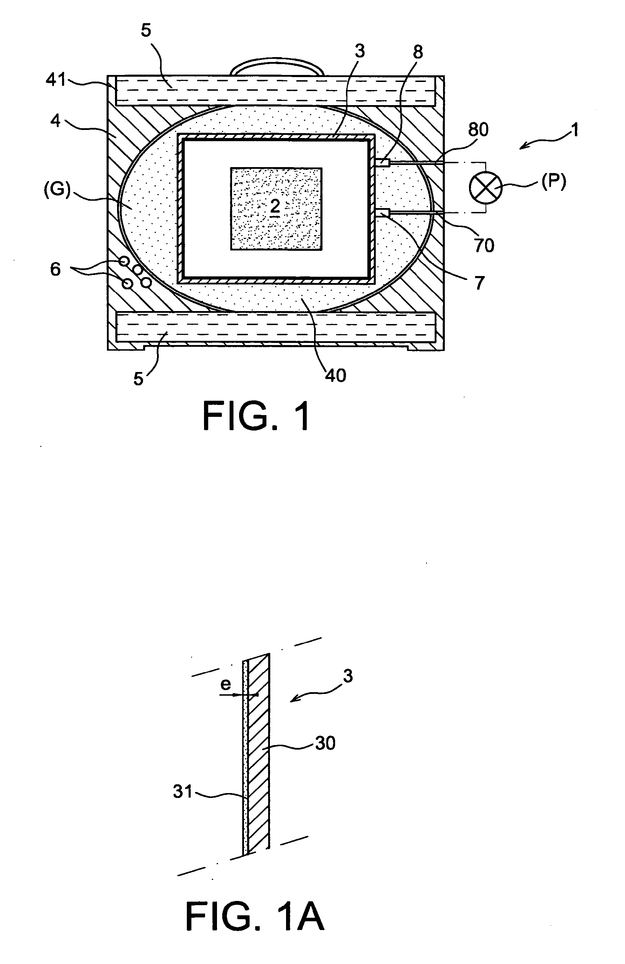

La partie rigide 41 comprend également des moyens de régulation (6) de l'hygrométrie ici sous la forme de dessicants (figure 1).

La partie rigide 41 de la valise maintient ainsi des conditions de température et d'hygrométrie contrôlée limitant la désorption de la contamination chimique déposée sur les échantillons.

Il va de soi qu'à titre de variante des moyens de régulation de la température, il peut être choisi des eutectiques dont le volume dépend de la température souhaitée et la durée de maintien de cette température.

De préférence, le boitier 3 doit pouvoir être nettoyé ou maintenu dans un gaz inerte d'où le système d'injection associé, tel que représenté à la figure 1 : références 7,70. Ce système d'injection permet au boitier 3 d'être connecté à un système de gaz inerte (P) filtré pour un nettoyage avant introduction de support(s) 2. En outre, le boitier 3 comprend une buse d'éjection 8 dans laquelle est intégrée un filtre particulaire, la buse d'éjection 8 étant reliée à l'extérieur de l'enveloppe 4 par un canal 80 de manière à pouvoir éjecter tout gaz résiduel du support 2 contaminé à analyser, gaz résiduel présent à l'intérieur du boitier fermé 3 contenant le support (2). Les filtres utilisés non représentés seront de préférence choisis pour pouvoir récupérer les membranes collectrices de la part particulaire de la contamination chimique.

L'invention propose ainsi un moyen fiable permettant de garantir le confinement de contamination(s) chimique(s), en particulier sous forme gazeuse, sur un support tout en contrôlant avantageusement les paramètres de température et d'hygrométrie environnant ce support.

L'invention ainsi décrite permet de :
- maintenir le(es) contamination(s) chimique(s) sur un support sans perte et sans dénaturer ni le support ni la contamination chimique qu'elle soit de forme moléculaire ou de forme particulaire,
- garantir le confinement de (des) contamination(s) chimique(s) sur le support de prélèvement vis-à-vis de l'extérieur par un concept multi-barrière,
- garantir l'inertie chimique et mécanique du boitier de confinement par rapport à la(aux) contamination(s) chimique(s) déposée(s) sur le support liquide ou solide,
- maintenir la température du support à des températures inférieures à la température d'usage pour éviter la désorption les molécules condensées sur le support,
- maintenir l'hygrométrie à des teneurs représentatives des conditions d'utilisation de la surface contaminée,
- nettoyer le boitier de confinement avant réalisation par une purge de gaz inerte filtré,
- limiter les pertes de contamination chimique par une surpression en gaz inerte autour du boitier de confinement,
- éviter la génération additive de particules ou molécules lors du transport, grâce à une sélection judicieuse des matériaux constitutifs des barrières (boitier, enveloppe externe, et, le cas échéant, enveloppe souple), ces matériaux possédant de faibles taux de dégazage et de faibles potentiels à générer des particules.

Les applications immédiates et futures visées par l'invention sont nombreuses : dans certaines industries (du domaine spatial, micromécanique, optique, nanotechnologies mais aussi industrie pharmaceutique et agroalimentaire, hôpitaux...), la maîtrise de la contamination chimique passe par des prélèvements sur des supports solides ou liquides sur la ligne de process. Par contre, rares sont les industries qui possèdent leur laboratoire d'analyse chimique. Par conséquent, il est essentiel de disposer de moyens de transport fiables de ces échantillons.

L'invention peut tout aussi bien s'appliquer au confinement et transport de la bio-contamination, tels que ceux définis dans la norme ISO 14698-1, par exemple les bactéries, champignon, parasites ou virus.

## Revendications

1. Dispositif de prélèvement et confinement de contaminations chimiques destinées à l'analyse chimique, comprenant :
- au moins un récipient adapté pour contenir un liquide de prélèvement dans lequel sont piégés des contaminations chimiques sous la forme particulaire et/ou moléculaire, le récipient comprenant des parois chimiquement neutres,
- une enveloppe externe de dimensions adaptées pour maintenir le récipient obturé dans une position donnée et, pour contenir un gaz en contact avec le récipient obturé et en surpression par rapport à l'intérieur dudit récipient, l'enveloppe externe comprenant des moyens de régulation de la température à l'intérieur du récipient obturé.

2. Dispositif de prélèvement et confinement (1) de contaminations chimiques destinées à l'analyse chimique, comprenant :
- au moins un support (2) adapté pour adsorber des contaminations chimiques sous la forme particulaire et/ou moléculaire,
- un boitier (3) pour maintenir le (s) support(s) (2) dans une position donnée, le boitier (3) comprenant des parois (30) chimiquement neutres adaptées pour se refermer sur elles-mêmes en formant un volume clos,
- une enveloppe externe (4) de dimensions adaptées à la fois pour envelopper le boitier fermé (3) et pour contenir un gaz (G) en contact avec le boitier fermé et en surpression par rapport à l'intérieur dudit boitier, l'enveloppe externe (4) comprenant des moyens (5) de régulation de la température à l'intérieur du boitier fermé.

3. Dispositif de prélèvement et confinement (1) selon la revendication 2, dans lequel l'enveloppe externe (4) comprend une partie souple (40) chimiquement neutre, de dimensions adaptées à la fois pour envelopper le boitier fermé (3) et pour contenir un gaz (G) en contact avec le boitier fermé (3) et en surpression par rapport à l'intérieur dudit boitier.

4. Dispositif de prélèvement et confinement (1) selon la revendication 3, dans lequel la partie souple (40) est un film en polyéthylène.

5. Dispositif de prélèvement et confinement selon l'une quelconque des revendications précédentes, dans lequel les moyens de régulation de la température comprennent un circuit d'eau réfrigéré (5).

6. Dispositif de prélèvement et confinement selon l'une quelconque des revendications précédentes, dans lequel une sonde de température est implantée à l'intérieur du boitier fermé (3) autour du support (2) ou du récipient obturé de sorte à visualiser la T° depuis l'environnement extérieur à l'enveloppe et à les réguler manuellement.

7. Dispositif de prélèvement et confinement (1) selon l'une quelconque des revendications précédentes, dans lequel le gaz contenu (G) dans l'enveloppe externe (4) et en contact avec le boitier fermé ou le récipient obturé est un gaz inerte.

8. Dispositif de prélèvement et confinement (1) selon l'une quelconque des revendications 2 à 7, dans lequel l'enveloppe comprend des moyens (6) de régulation de l'hygrométrie.

9. Dispositif de prélèvement et confinement selon la revendication 8, dans lequel les moyens de régulation de l'hygrométrie comprennent des dessicants, tels que des billes de silica-gel, CaCl2.

10. Dispositif de prélèvement et confinement selon l'une quelconque des revendications 2 à 9, dans lequel les parois (30) du boitier (3) sont en inox et ses faces (300) en regard du support (2) sont recouvertes d'un revêtement chimiquement neutre tel que du téflon.

11. Dispositif de prélèvement et confinement (1) selon l'une quelconque des revendications 2 à 10, comprenant une buse d'injection (7) dans laquelle est intégrée un filtre particulaire, la buse d'injection (7) traversant le boitier (3) et étant reliée à l'extérieur de l'enveloppe (4) par un canal (70) de manière à pouvoir injecter un gaz inerte (G) à l'intérieur du boitier fermé (3) contenant le support (2).

12. Dispositif de prélèvement et de confinement (1) selon l'une quelconque des revendications 2 à 11, comprenant une buse d'éjection (8) dans laquelle est intégrée un filtre particulaire, la buse d'éjection (8) étant reliée à l'extérieur de l'enveloppe par un canal (80) de manière à pouvoir éjecter tout gaz résiduel présent à l'intérieur du boitier fermé (3) contenant le support (2).

13. Dispositif de transport comprenant un dispositif de prélèvement et confinement (1) selon l'une quelconque des revendications précédentes, dans lequel l'enveloppe externe (4) comprend une partie rigide (41) adaptée pour être transportée manuellement.

14. Dispositif de transport selon la revendication 13, dans lequel l'enveloppe externe (4) est constituée par des battants (410) de valise.

15. Procédé de prélèvement et confinement de contaminations chimiques destinées à l'analyse chimique comprenant les étapes suivantes :
a) prélèvement des contaminations chimiques par piégeage sous la forme particulaire et/ou moléculaire dans un liquide,
b) introduction du liquide contenant les contaminations chimiques dans un récipient aux parois chimiquement neutres et obturation du récipient,
c) mise en contact de l'extérieur du récipient obturé avec un gaz en surpression par rapport à l'intérieur du récipient,
d) régulation de la température régnant à l'intérieur du boitier depuis un environnement extérieur au gaz.

16. Procédé de prélèvement et confinement de contaminations chimiques destinées à l'analyse chimique comprenant les étapes suivantes :
a) adsorption des contaminations chimiques sous la forme particulaire et/ou moléculaire par au moins un support (2),
b) mise en place du support (2) dans un boitier (3) aux parois chimiquement neutres et fermeture du boitier autour du support,
c) mise en contact de l'extérieur du boitier fermé avec un gaz en surpression par rapport à l'intérieur du boitier,
d) régulation de la température régnant à l'intérieur du boitier depuis un environnement extérieur au gaz.

17. Procédé de prélèvement et de confinement de contamination(s) chimique(s) selon la revendication 15 ou 16, dans lequel le gaz en surpression est un gaz inerte (G).

18. Utilisation du dispositif de transport selon la revendication 13 ou 14 pour le transport de contaminations chimiques d'une unité de fabrication vers une unité d'analyse chimique.

## Claims

1. Device for sampling and confining chemical contaminations intended for chemical analysis, comprising:
- at least one container adapted to containing a sampling liquid in which are trapped chemical contaminations in particulate and/or molecular form, the container comprising chemically inert walls,
- an external envelope of dimensions adapted to maintaining the sealed container in a given position and to containing a gas in contact with the sealed container and at a higher pressure than inside said container, the external envelope comprising means of regulating the temperature inside the sealed container.

2. Device for sampling and confining (1) chemical contaminations intended for chemical analysis, comprising:
- at least one support (2) adapted to adsorbing chemical contaminations in particulate and/or molecular form,
- a box (3) to maintain the support (s) (2) in a given position, the box (3) comprising chemically inert walls (30) adapted to closing in on themselves, forming a closed volume,
- an external envelope (4) of dimensions adapted both to enveloping the closed box (3) and to containing a gas (G) in contact with the closed box and at a higher pressure than inside said box, the external envelope (4) comprising means (5) of regulating the temperature inside the closed box.

3. Device for sampling and confining (1) according to claim 2, wherein the external envelope (4) comprises a flexible chemically inert part (40), with dimensions adapted both to enveloping the closed box (3) and to containing a gas (G) in contact with the closed box (3) and at a higher pressure than inside said box.

4. Device for sampling and confining (1) according to claim 3, wherein the flexible part (40) is a polyethylene film.

5. Device for sampling and confining according to any of the preceding claims, wherein the means of regulating the temperature comprise a chilled water circuit (5).

6. Device for sampling and confining according to any of the preceding claims, wherein a temperature probe is implanted inside the closed box (3) around the support (2) or the sealed container in order to display the T° from the environment outside the envelope and to regulate it manually.

7. Device for sampling and confining (1) according to any of the preceding claims, wherein the gas contained (G) within the external envelope (4) and in contact with the closed box or the sealed container is an inert gas.

8. Device for sampling and confining (1) according to any of claims 2 to 7, wherein the envelope comprises means (6) of regulating the hygrometry.

9. Device for sampling and confining according to claim 8, wherein the means of regulating the hygrometry comprise desiccants, such as beads of silica-gel, CaCl₂.

10. Device for sampling and confining according to any of claims 2 to 9, wherein she walls (30) of the box (3) are made of stainless steel and its faces (300) opposite the support (2) are covered with a chemically inert coating such as Teflon.

11. Device for sampling and confining (1) according to any of claims 2 to 10, comprising an injection nozzle (7) in which is incorporated a particulate filter, the injection nozzle (7) passing through the box (3) and being linked to the outside of the envelope (4) by a channel (70) so as to be able to inject an inert gas (G) inside the closed box (3) containing the support (2).

12. Device for sampling and confining (1) according to any of claims 2 to 11, comprising an ejection nozzle (8) in which is incorporated a particulate filter, the ejection nozzle (8) being linked to the outside of the envelope by a channel (80) so as to be able to eject any residual gas present inside the closed box (3) containing the support (2).

13. Transport device comprising a device for sampling and confining (1) according to any of the preceding claims, wherein the external envelope (4) comprises a rigid part (41) adapted to be manually transported.

14. Transport device according to claim 13, wherein the external envelope (4) comprises suitcase flaps (410).

15. Method for sampling and confining chemical contaminations intended for chemical analysis comprising the following steps:
a) sampling of chemical contaminations by trapping in particulate and/or molecular form in a liquid,
b) introducing the liquid containing the chemical contaminations into a container having chemically inert walls and sealing of the container,
c) bringing the outside of the sealed container into contact with a gas at a higher pressure than inside the container,
d) regulating the temperature prevailing inside the box from an environment external to the gas.

16. Method for sampling and confining chemical contaminations intended for chemical analysis comprising the following steps:
a) adsorption of the chemical contamination in particulate and/or molecular form by at least one support (2),
b) placing the support (2) in a box (3) having chemically inert walls and closing of the box around the support,
c) bringing the outside of the closed box into contact with a gas at a higher pressure than inside the box,
d) regulating the temperature prevailing inside the box from an environment external to the gas.

17. Method of sampling and confining chemical contamination(s) according to claim 15 or 16, wherein the gas at higher pressure is an inert gas (G).

18. Use of the transport device according to claim 13 or 14 for the transport of chemical contaminations from a production unit to a chemical analysis unit.

## Patentansprüche

1. Vorrichtung zur Entnahme und zum Einschließen chemischer Verunreinigungen, welche zur chemischen Analyse bestimmt sind, umfassend:
- wenigstens einen Behälter, welcher dazu angepasst ist, eine Entnahmeflüssigkeit zu enthalten, in welcher chemische Verunreinigungen in Partikelform oder/und Molekularform gefangen sind, wobei der Behälter chemisch inerten Wände umfasst,
- eine Außenhülle, welche Abmaße aufweist, die dazu angepasst sind, den verschlossenen Behälter in einer gegebenen Position zu halten und ein Gas zu enthalten, welches in Kontakt mit dem verschlossenen Behälter steht und in Bezug auf das Innere des Behälters unter Überdruck steht, wobei die Außenhülle Mittel zur Regelung/Steuerung der Temperatur im Inneren des verschlossenen Behälters aufweist.

2. Vorrichtung zur Entnahme und zum Einschließen (1) chemischer Verunreinigungen, welche zur chemischen Analyse bestimmt sind, umfassend:
- wenigstens einen Halter (2), welcher dazu angepasst ist, chemische Verunreingungen in Partikelform oder/und Molekularform zu adsorbieren,
- einen Kasten (3), um den/die Halter (2) in einer gegebenen Position zu halten, wobei der Kasten (3) chemisch inerte Wände (30) umfaßt, welche dazu angepasst sind, aneinander unter Bildung eines umschlossenen Volumens zu schließen,
- eine Außenhülle (4) mit Abmaßen, welche dazu angepasst sind, zugleich den geschlossenen Kasten (3) zu umhüllen und ein Gas (G) zu enthalten, welches in Kontakt mit dem geschlossenen Kasten steht und in Bezug auf das Innere des Kastens unter Überdruck steht, wobei die Außenhülle (4) Mittel (5) zur Regelung/Steuerung der Temperatur im Inneren des geschlossenen Kastens umfasst.

3. Vorrichtung zur Entnahme und zum Einschließen (1) nach Anspruch 2, wobei die Außenhülle (4) einen flexiblen und chemisch inerten Abschnitt (40) umfasst, welcher Abmaße aufweist, die dazu angepasst sind, zugleich den geschlossenen Kasten (3) zu umhüllen und ein Gas (G) zu enthalten, welches in Kontakt mit dem geschlossenen Kasten (3) steht und in Bezug auf das Innere des Kastens unter Überdruck steht.

4. Vorrichtung zur Entnahme und zum Einschließen (1) nach Anspruch 3, wobei der flexible Abschnitt (40) ein Polyethylenfilm ist.

5. Vorrichtung zur Entnahme und zum Einschließen nach einem der vorangehenden Ansprüche, wobei die Mittel zur Regelung/Steuerung der Temperatur einen Kühlwasserkreislauf (5) enthalten.

6. Vorrichtung zur Entnahme und zum Einschließen nach einem der vorangehenden Ansprüche, wobei eine Temperatursonde im Inneren von dem geschlossenen Kasten (3) um den Halter (2) oder den verschlossenen Behälter vorgesehen ist, um die T° von der Umgebung außerhalb der Hülle anzuzeigen und um sie manuell zu regulieren.

7. Vorrichtung zur Entnahme und zum Einschließen (1) nach einem der vorangehenden Ansprüche, wobei das Gas (G), welches in der Außenhülle (4) enthalten ist und in Kontakt mit dem geschlossenen Kasten oder dem geschlossenen Behälter steht, ein Inertgas ist.

8. Vorrichtung zur Entnahme und zum Einschließen (1) nach einem der Ansprüche 2 bis 7, wobei die Hülle Mittel (6) zur Regelung/Steuerung der Feuchtigkeit umfasst.

9. Vorrichtung zur Entnahme und zum Einschließen nach Anspruch 8, wobei die Mittel zur Regelung/Steuerung der Feuchtigkeit Trockenmittel umfassen, wie beispielsweise Kugeln aus Kieselgel, CaCl₂.

10. Vorrichtung zur Entnahme und zum Einschließen nach einem der Ansprüche 2 bis 9, wobei die Wände (30) des Kastens (3) aus rostfreiem Material oder Edelstahl sind und ihre dem Halter (2) gegenüberliegenden Seiten (300) mit einer chemisch inerten Beschichtung, wie beispielsweise Teflon, beschichtet sind.

11. Vorrichtung zur Entnahme und zum Einschließen (1) nach einem der Ansprüche 2 bis 10, umfassend eine Injektionsdüse (7), in welche ein Partikelfilter integriert ist, wobei die Injektionsdüse (7) den Kasten (3) durchquert und mit dem Äußeren der Hülle (4) durch einen Kanal (70) derart verbunden ist, dass ein Inertgas (G) in das Innere des geschlossenen Kastens (3), welcher den Träger (2) enthält, injiziert werden kann.

12. Vorrichtung zur Entnahme und zum Einschließen (1) nach einem der Ansprüche 2 bis 11, umfassend eine Auswurfdüse (8), in welche ein Partikelfilter integriert ist, wobei die Auswurfdüse (8) mit dem Äußeren der Hülle durch einen Kanal (80) derart verbunden ist, dass das gesamte Restgas, welches im Inneren des geschlossenen Kastens (3) vorhanden ist, welcher den Halter (2) umfasst, abgegeben werden kann.

13. Transportvorrichtung, umfassend eine Vorrichtung zur Entnahme und zum Einschließen (1) nach einem der vorangehenden Ansprüche, wobei die Außenhülle (4) einen starren Abschnitt (41) umfaßt, welcher dazu angepasst ist, manuell transportiert zu werden.

14. Transportvorrichtung nach Anspruch 13, wobei die Außenhülle (4) aus Kofferflügeln (410) gebildet ist.

15. Verfahren zur Entnahme und zum Einschließen chemischer Verunreinigungen, welche zur chemischen Analyse bestimmt sind, wobei das Verfahren die folgenden Schritte umfasst:
a) Entnahme der chemischen Verunreinigungen durch Einfangen in Partikelform oder/und in Molekularform in einer Flüssigkeit,
b) Einführen einer Flüssigkeit, welche die chemischen Verunreinigungen enthält, in einen Behälter mit chemisch inerten Wänden und Verschließen des Behälters,
c) In-Kontakt-Bringen des Äußeren des geschlossenen Behälters mit einem in Bezug auf das Innere des Behälters unter Überdruck stehenden Gas,
d) Regeln/Steuern der im Inneren des Kastens herrschenden Temperatur von einer Umgebung außerhalb des Gases aus.

16. Verfahren zur Entnahme und zum Einschließen chemischer Verunreinigungen, welche zur chemischen Analyse bestimmt sind, wobei das Verfahren die folgenden Schritte umfasst:
a) Absorption der chemischen Verunreinigungen in Partikelform oder/und in Molekularform durch wenigstens einen Halter (2),
b) Platzieren des Halters (2) in einem Kasten (3) mit chemisch inerten Wänden und Schließen des Kastens um den Halter herum,
c) In-Kontakt-Bringen des Äußeren des geschlossenen Kastens mit einem in Bezug auf das Innere des Kastens unter Überdruck stehenden Gas,
d) Regeln/Steuern der im Inneren des Kastens herrschenden Temperatur von einer Umgebung außerhalb des Gases aus.

17. Verfahren zur Entnahme und zum Einschließen chemischer Verunreinigungen bzw. einer chemischen Verunreinigung nach Anspruch 15 oder 16, wobei das unter Überdruck stehende Gas ein Inertgas (G) ist.

18. Verwendung der Transportvorrichtung nach Anspruch 13 oder 14 zum Transport von chemischen Verunreinigungen von einer Herstellungseinheit zu einer chemischen Analyseeinheit.
